# EUROPEAN PATENT APPLICATION

(11) **EP 4 726 242 A1**
(43) Date of publication of application: **15.04.2026**
(21) Application number: 24383118.7
(22) Date of filing: 14.10.2024
(51) Int. Cl.: F16L 21/02, F16L 21/03, F16L 27/10, F16L 25/12

(54) **CONNECTOR DEVICE FOR CONNECTING TWO SPACED-APART CONDUITS**

(71) Applicant: BORGWARNER EMISSIONS SYSTEMS SPAIN, S.L.U., 36315 Vigo Pontevedra (ES)
(72) Inventor: GEA, Andrea, E-36209 Vigo, Pontevedra (ES); MARIÑO, Eloy, E-36205 Vigo, Pontevedra (ES); RIVEIRO, Eduardo, E-36416 Mos, Pontevedra (ES); LOZANO, Francisco, E-36400 O Porriño (ES); HERMIDA, Xoan, E-36380 Gondomar (ES)
(74) Representative: ABG Intellectual Property Law, S.L.

(57) **Abstract**

The present invention relates to a connector device intended for connecting two spaced-apart and essentially aligned conduits SP. The conduits SP being essentially aligned means that the tubes can be positioned with a certain degree of alignment and the connector device must ensure a sealed connection even under these circumstances. The connector device comprises means 1, 2 that allow connection with the end of both conduits, ensuring fluidic communication and a sealed attachment with both.

## Description

### OBJECT OF THE INVENTION

The present invention relates to a connector device intended for connecting two spaced-apart and essentially aligned conduits. The conduits being essentially aligned means that the tubes can be positioned with a certain degree of alignment and the connector device must ensure a sealed connection even under these circumstances.

The connector device comprises means that allow connection with the end of both conduits, ensuring fluidic communication and a sealed attachment with both.

The application of this connection is mainly comprised in the use thereof in electric vehicles in the context of the search for solutions aimed at protecting the environment.

### BACKGROUND OF THE INVENTION

One of the most active areas of technology is the design of fluid connectors. The manufacture of modules with a certain function that must be fluidically connected either in series or in parallel requires at some point connectors that ensure the fluidic connection, with there being a set of technical challenges that must be carefully addressed to ensure an effective and functional connection.

One of the areas wherein these challenges are emerging is in the construction of batteries for electrical energy storage that allows powering vehicles with electric engines. Batteries are formed by packed cells and have temperature requirements that need to be ensured, both to prevent the temperature from dropping below a certain lower value and to prevent excessive heating above a higher temperature value as well.

One way to ensure that temperature values are within range is by including heat exchange modules that either give off heat to or remove heat from battery cells.

These heat exchange modules use a liquid coolant such that, when connecting several modules to one another, there is a need to provide sufficiently reliable connectors which allow the connection of these modules.

A specific type of connection is the one established between essentially aligned conduits. This configuration occurs, for example, when a plurality of conduits are attached together by linking.

The modules have conduit ends designed to be aligned to the end of another conduit of the adjacent module. However, the individual fixing of each module means that the objective of aligning both ends of the tubes is not achieved in practice. In such cases, the fluid connector must be capable of ensuring a leak-tight and reliable connection even with this lack of alignment.

The separation between tubes is necessary to prevent, due to the lack of relative positioning between modules, the ends of the tubes to be attached from causing mechanical interference. Therefore, a certain separation which compensates for positioning errors is established. However, this separation imposes that the connection ensures that the fluid coming out of the end of a conduit is conducted to the end of the other conduit in sealing conditions.

Another aspect that must be ensured by connectors of this type is to show sufficient strength and durability. Continuing with the example of battery modules, when the modules are installed in a vehicle and are therefore subjected to accelerations, stresses, and vibrations that can cause relative movement between the ends of the tubes appear and the stresses appearing at the attachment cause leaks that overcome the sealing measures. These are not the only loads to which a battery module is subjected, they are also subjected to others that are no less important such as the internal pressure of the liquid coolant or the stresses due to thermal cycles that cause expansions and all of them result in stresses in the attachment.

Likewise, when the number of connectors to be installed is large, being a component that seems to be of minor importance compared to other more complex ones, it has a very significant impact on assembly times and therefore on final manufacturing costs.

Furthermore, the use of a large number of connectors increases the probability of failure of the assembly, so that under these circumstances the high reliability imposed on the design of a fluid connector is further justified.

Another important factor is head loss. Head loss is a key aspect in any fluid transport system. A poorly designed connector can generate turbulence or restrictions that increase pressure loss in the system, affecting flow efficiency. The connector design must be optimized to minimize head losses, ensuring that fluid is transferred from one tube to another as efficiently as possible since the separation between tube ends always implies that the connector will have at least one region exposed to the passage of fluid.

The connector device according to any of the embodiments described below overcomes these technical challenges.

### DESCRIPTION OF THE INVENTION

A first aspect of the invention relates to a device suitable, and more specifically adapted, for connecting two conduits intended to conduct a fluid, preferably liquid coolant, which are spaced apart from and essentially aligned with one another.

One of the most useful areas of application is the connection of heat exchange tubes that transport a heat exchange liquid for heating or cooling battery cells. In this case, each heat exchange tube has a conduit with two ends, one conduit end intended for feeding and the other end for collecting the outflow. The device is suitable for the connection of both conduit ends, in this case, each end of the tube or conduit will be connected by means of a connection device. Typical configurations of heat exchange tubes are either in U shape with the two ends on the same side and close to one another or in I shape wherein the two ends of the conduit are at opposite sides.

The connection gives rise to a pack of interconnected heat exchange conduits. In many of the packs of tubes thus formed, the separation tolerances between tubes, as well as the possible lack of alignment between consecutive tube conduits to be connected, are compensated for by the connection device.

This is not the only technical area of application since the connection device is applicable to the connection between two spaced-apart and essentially aligned conduits both in the automobile sector and in other technological sectors.

Essentially aligned should be understood to mean a condition in which the tubes are designed to be positioned in alignment, but the presence of small deviations is accepted in practice due both to the distancing between the geometric axes of both conduits to be connected and to the relative angle between said axes.

Even in the event of the unwanted presence of a certain degree of misalignment, the connector device is designed to allow the connection, likewise ensuring the fluidic continuity with sealing conditions.

The connector device according to the invention comprises:
- *a first body, having a tubular configuration extending according to a longitudinal direction, comprising:*
   *a first rigid end segment, with its inner surface adapted to establish sealing on the outer surface of the end of a first conduit, and*
   *a second rigid end segment, arranged at the opposite end according to the longitudinal direction, with its inner surface adapted to establish sealing on the outer surface of the end of a second conduit, and*
   *a third intermediate segment, located between the first outer segment and the second end segment, according to the longitudinal direction, with its inner surface configured to fluidically connect the inner surface adapted to establish sealing of the first end segment and of the second end segment;*
- *a first rigid ring configured to externally surround the first end segment of the first body, and*
- *a second rigid ring configured to externally surround the second end segment of the first body, both rigid rings;*

*wherein the inner surfaces of the first and second end segments adapted to establish sealing comprise a perimeter seat, and an elastically deformable sealing element preferably an O-ring, housed in each perimeter seat, and*
*wherein the first rigid ring and the second rigid ring are adapted to prevent the sealing element from coming out due to movement in the longitudinal direction.*

The connector device comprises a first body which establishes the intermediate conduction between both fluid conduits to be connected. That is, it comprises:
- a rigid segment, the one identified as first end segment, intended to establish sealing on the outer surface of the end of one of the conduits to be connected,
- another rigid segment, the one identified as second end segment, opposite the first end segment, intended to establish sealing on the outer surface of the end of the other conduit to be connected, and
- a third intermediate segment, the segment located between the first end segment and the second end segment, which conducts the fluid at least along the space of separation between the conduits to be connected, providing fluidic continuity to the region located between the two sealing regions, i.e., that of the first segment and that of the second segment.

The sealing condition established between each end segment and the end of the corresponding conduit allows a certain degree of misalignment.

According to the preferred example, the first body is tubular shaped, such that at both ends of the first body, when coupling with the end of the corresponding conduit is carried out, the first end segment surrounds a first conduit and the second end segment surrounds the second conduit; both end segments therefore externally surround the ends of the conduits.

Also, according to this preferred example the first body is rigid, that is, the third intermediate segment is also rigid, although it is possible for the first body to incorporate some elastically deformable parts, for example inner flanges formed by co-injection, but maintaining the first body as a rigid single body.

In the first and second end segments, the inner surface is configured to be supported on the conduit, ensuring sealing. The sealing is achieved by means of a sealing element supported on a perimeter seat arranged on the inner surface of each end segment. Preferably, this sealing element is an O-ring. Other examples of sealing element alternatively to the O-ring are those having an X-shaped section (or X-ring), a V-shaped section (or V-ring), a U-shaped section (or U-ring), a D-shaped section (or D-ring), a square-shaped section (or square-ring).

The sealing element allows for changes in the orientation of the axis of the conduit it surrounds given that the main contact with the conduit is the sealing element, which ensures sealing, and the configuration of the third segment in the inner area thereof which is adapted to ensure the fluidic continuity between the two conduits to be connected.

The rigid rings prevent the sealing element from coming out, at least limiting the movement of said sealing element in the longitudinal direction. That is, both rings comprise an axial retention element preventing the sealing element from coming out.

According to an embodiment applicable to all the examples described above, *the third intermediate segment has its inner surface configured either to establish contact with, or to be arranged between, the ends of the two conduits to be connected and to prevent said conduits from contacting one another.*

The insertion of the connector device can be performed manually or automatically. When the insertion is manual, given that the degree of insertion cannot be seen from the outside, the third intermediate segment according to this preferred example is configured to establish contact with the end of the inserted conduit. This allows inserting the connector device until achieving this contact, although there may be a distancing in operative conditions. The contact between the end of the conduit and the third intermediate segment ensures that the end of the conduit does not invade a space that must be occupied by the end of the other conduit so that this other conduit is also sufficiently inserted so as to ensure that its corresponding end segment is supported on the outer surface thereof and sealing is not affected. Likewise, the third intermediate segment prevents contact between the ends of essentially aligned conduits. Otherwise, noise and damage may be generated in the materials of both conduits.

That said, in conditions of use it is not desirable for the conduits to be in contact with the third intermediate segment although the contact establishes limits that ensure the suitable conditions described in the preceding paragraph. The absence of contact prevents noises and damage. Additionally, the possibility of adjusting the degree of insertion allows the heat exchange tubes that are connected to not get too close together or too far apart since, if errors accumulate in a consecutive attachment of tubes, the packing can be either too narrow or too wide.

According to an example applicable to any of the described examples, *the axial retention element is a plate located perpendicular to the longitudinal direction with an opening for the passage of the conduit.*

Preferably, this axial retention plate is a prolongation of the annular body, in the area of the end of the connector, which reduces its diameter until reaching a diameter smaller than the outer diameter of the sealing element to cause the axial retention thereof, but larger than the diameter of the conduit to be connected to allow both the passage of the conduit and possible misalignments.

According to this example, after inserting the sealing element or elements into the connector, the connector is configured by inserting the rings preventing the sealing elements from coming out on either side.

According to an example applicable to any of the described examples, *the third intermediate segment comprises at least one inner flange, preferably a continuous or discontinuous inner perimeter flange, which is an integral part of the first body configured to limit the insertion of any of the two conduits to be connected, according to the longitudinal direction.*

This is the case that was just described; in the third intermediate segment, there is an inner flange that limits the insertion of any of the two conduits to be connected, and as a result, prevents both conduits from contacting one another. This restriction extends along the perimeter to allow making contact with the end of the conduit regardless of the orientation of the misalignment.

It should be indicated that the characteristic of the inner flange of extending along the perimeter can be continuous or discontinuous. That is, it may be, for example, in the form of a perimeter rib or a set of flanges distributed along the perimeter.

According to another embodiment, there is one flange or a plurality of flanges not necessarily equally distributed along the perimeter.

Likewise, preferably, the inner diameter of the inner perimeter flange is not smaller than the inner diameter of the conduit, which prevents causing a restriction for the passage of the fluid and, therefore, an excessive pressure drop. It is indicated that this condition preferably applies given that the conduits to be connected may have small thicknesses and the condition is not always applicable, particularly when it is more important to ensure that the perimeter flange ensures retention in all cases.

An example of interest applicable to any of the described examples is considered an example in which the first body and rings are made of plastic.

According to an example applicable to any of the described examples, *the first body comprises on the outer surface of the first end segment, of the second end segment, or of both segments, a coupling complementary to another one of the inner surface of the corresponding ring:*
- *either the outer surface of the first body comprises at least one recess, preferably a perimeter recess, complementary to a flange, also preferably a perimeter flange, of the ring, or*
- *the outer surface of the first body comprises at least one flange, preferably a perimeter flange, complementary to a recess, also preferably a perimeter recess, of the ring;*
*for the axial retention of the ring.*

The first ring, the second ring, or both rings preferably have a coupling complementary to the first body. This coupling at least establishes an axial retention, and also preferably establishes a fixing against rotation and therefore a fixing between the ring and first body.

According to this example, one of the elements, the first body or the ring, has a recess, which is preferably a perimeter recess, and the other element, has a protrusion, which is also preferably a perimeter protrusion and complementary such that the latter is configured to be housed, at least partially, in the former.

Preferably, the attachment through this coupling is by insertion of the ring according to the longitudinal direction on the first body until obtaining mutual coupling.

According to an example applicable to any of the described examples, and in particular as an alternative to the example described immediately above, *at least one of the rings and an end segment are attached by a threaded attachment.*

An alternative form of linkage between any of the two rings or both to the first body is by threading. In this case, the ring has an inner thread which is complementary to an outer thread of the first body, this complementary thread being located at the end of the body. In this case, once threaded, the ring is retained axially and also against rotation due to the tightening of the thread.

According to an example applicable to any of the described examples, *the inner diameter of the sealing element before being coupled to the conduit is smaller than the inner diameter of the third intermediate segment to allow a lack of alignment.*

Any of the conduits to be connected has a diameter larger than the inner diameter of the sealing element to cause, in the operating mode when inserted in the connector, the expansion of the sealing element by elastic deformation, ensuring the sealing.

Given that the conduit has a certain degree of pivoting around the support provided by the sealing element, the connector allows a certain degree of misalignment between the two conduits. This is emphasized because the degree of misalignment allowed by the sealing element with the conduit that corresponds to it and the degree of misalignment allowed by the other sealing element with the other conduit that corresponds to it are misalignments that add up to compensate for the total misalignment between the two conduits.

It should be indicated that, in order to determine the condition of having a diameter smaller than the inner diameter of the third intermediate segment, said diameter of the third intermediate segment is to be considered in the region intended to house the end of the conduit and not the reduced diameter that there may be in the embodiment where there is a restriction of diameter in the third intermediate segment, for example in its central area or also, for example, by means of one or more inner flanges, the restriction of diameter intended to limit the axial insertion between conduits or the contact of one with the other.

Likewise, the measurement of the diameters should be interpreted broadly given that if a flange/recess is not continuous along the perimeter (or is an isolated flange/recess), diameter should be understood to mean the transverse measurement taken according to at least one section containing the longitudinal axis and intersecting said flange/recess. That is, the minimum distance between the flange and the longitudinal axis is taken.

According to an example applicable to the example described above, *the outer diameter of the conduit for which it is intended to be coupled in the operating mode is smaller than the inner diameter of the third intermediate segment to allow a lack of alignment.*

The clarification or interpretation as to the condition of the inner diameter of the third intermediate segment of the above embodiment also applies to this embodiment.

When the support of the conduit is established in the sealing element due to a degree of misalignment, the conduit shows a higher degree of separation with respect to the longitudinal axis at the end given that the minimum distance to the longitudinal axis is seen in the place of the sealing element given that it is where the support is established. Given that the outer diameter of the conduit is smaller than the inner diameter of the third intermediate segment, then there is a distance which allows a degree of alignment between the conduit and the connector. It is understood that the condition of the diameter of the conduit being smaller than the inner diameter of the third segment is verified in the region, according to the longitudinal direction, where the conduit is housed since precisely in the central area there is, according to embodiments, a restriction of the diameter in the third segment intended to prevent the two conduits from coming into contact.

A second aspect of the invention relates to a heat exchange system comprising a *plurality of heat exchange tubes with at least one fluidic connection for a heat exchange liquid, wherein the plurality of heat exchange tubes are interconnected by means of a connector according to any of the above claims.*

A third aspect of the invention relates to a method of assembling a fluid connector according to any of the described examples, which comprises performing the following steps in any order:
- *inserting the sealing elements into the perimeter seats;*
- *inserting the first rigid ring into the first end segment of the first body such that the first rigid ring externally surrounds the first end segment of the first body; and*
- *inserting the second rigid ring into the second end segment of the first body such that the second rigid ring externally surrounds the second end segment of the first body.*

A fourth aspect of the invention relates to a method for connecting two essentially aligned conduits by means of the device assembled according to the method of the preceding claim, which comprises:
- *inserting the connector into the end of a conduit of the two conduits to be connected at one end of the fluid connector,*
- *inserting the end of the other conduit of the two conduits to be connected into the opposite end of the fluid connector.*

### DESCRIPTION OF THE DRAWINGS

These and other features and advantages of the invention will become more apparent based on the following detailed description of a preferred embodiment, given only by way of illustrative and non-limiting example, in reference to the attached figures.
- Figure 1: This figure shows a perspective view of an embodiment of the connector.
- Figure 2: This figure shows a perspective view of a section according to a plane containing the longitudinal axis of the connector according to the same embodiment.
- Figure 3: This figure shows an exploded perspective view of the two parts forming the second body and the first body of the embodiment. The sealing elements configured as O-rings have been removed to allow a greater visual access.
- Figure 4: This figure shows a front section view of the same embodiment. This figure also schematically shows a possible position of the conduits that are spaced apart from one another in a non- alignment condition.

### DETAILED DESCRIPTION OF THE INVENTION

According to the first inventive aspect, the present invention relates to a fluid connector intended for connecting two conduits that are spaced apart from one another.

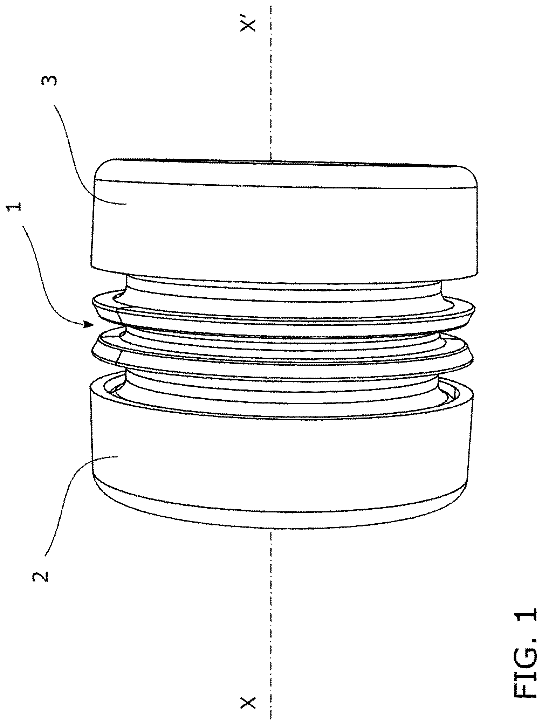

Now considering the figures, Figure 1 shows a perspective view of an embodiment of the connector.

The fluid connector has an opening at one of its ends and has another opening at the opposite end. The fluid connector is configured to receive a conduit (SP) through each opening, wherein both conduits (SP), i.e., the two conduits (SP) to be fluidically connected, can have a degree of misalignment. The longitudinal direction (X-X') will be understood to mean in all cases the geometric axis of the connector.

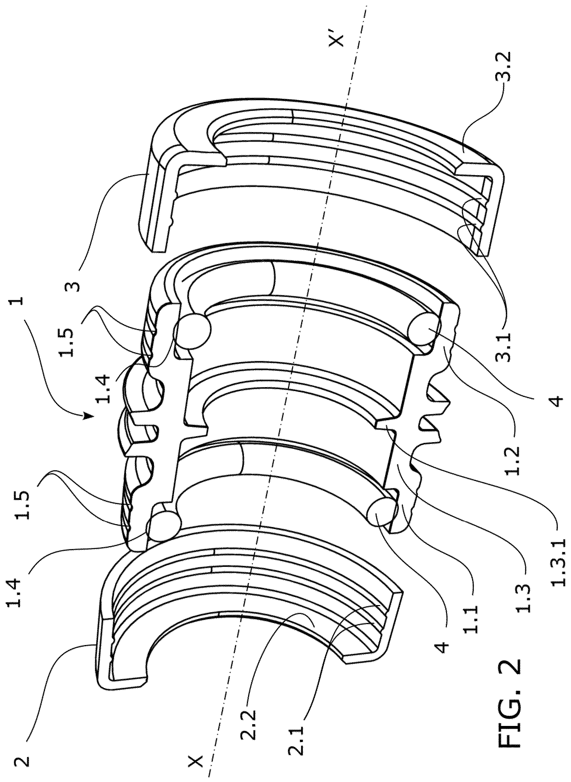

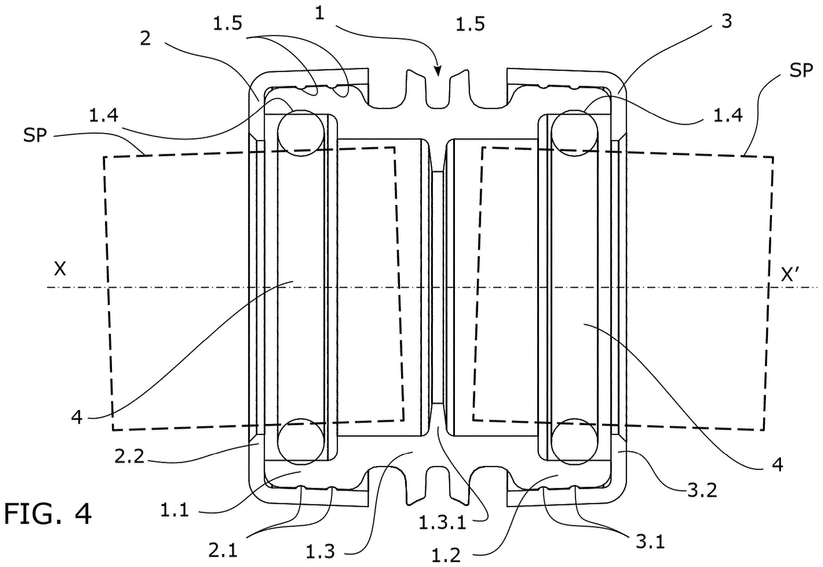

Figures 2 and 4 show a longitudinal section (X-X') of the fluid connector, in Figure 2 according to a perspective view and in Figure 4 according to a lateral front view, and this second one shows schematically, by means of two rectangles in thick discontinuous line, a possible position of insertion of the two conduits (SP) to be connected, showing a certain degree of misalignment.

The connector comprises a first body (1), in this embodiment manufactured in plastic, that confers it a rigid behavior.

Three segments, two end segments and one central segment, are distinguished in the first body (1). A first end segment (1.1) and a second end segment (1.2) are distinguished at the end segments, with the latter being located at the opposite end. The first end segment (1.1) is configured to receive the end of one of the conduits (SP) to be connected by insertion. The second end (1.2) is the one which houses the other conduit (SP), both entering by insertion.

Figure 1 shows the outer appearance where only the rigid rings (2, 3) and the outer surface of the central segment, the third intermediate segment (1.3), can be seen.

Figure 2 shows how the first segment (1.1) and the second segment (1.2) have their inner surfaces adapted to establish sealing on the outer surface of the end of the conduit (SP) by means of respective O-rings (4), the sealing elements, located in inner perimeter seats (2.1, 3.1) internal perimeter. In this figure and Figure 4, the O-rings are shown overlapping a part of the region where they are seated, showing with this overlapping the dimensions they adopt when there is no elastic deformation of the O-rings (4) to allow showing the true dimension thereof.

Figure 2 also shows in the inner area, centered in the third intermediate segment (1.3), a perimeter flange (1.3.1) intended to limit the insertion of either conduit (SP) such that the conduits to be connected do not come into contact with one another.

According to this embodiment, the inner walls, which are on either side, according to the longitudinal direction (X-X') have a larger diameter than the diameter of the conduit to be connected in the operating mode, so the end of the conduits (SP) allows a certain degree of misalignment without actually coming into contact with said inner wall.

In this same Figure 2, the rings show a transverse wall, that is, a wall perpendicular to the longitudinal direction (X-X') when they are installed in the connector, serving as an axial retention element (2.2, 3.2).

This axial retention element (2.2, 3.2) prevents the O-rings (4) from coming out even in the case of axial stresses in the conduits (SP) to be connected.

Furthermore, the rings (2, 3) show on their inner cylindrical surface perimeter flanges (2.1, 3.1), there being two in this embodiment, which are complementary to perimeter recesses (1.5) located on the outer surface of both the first and the second end segment (1.1, 1.2).

The forced insertion according to the longitudinal direction (X-X') of the rings (2, 3) allows the perimeter flanges (2.1, 3.1) to reach their complementary perimeter recesses (1.5) and leave the rings (2, 3) axially retained.

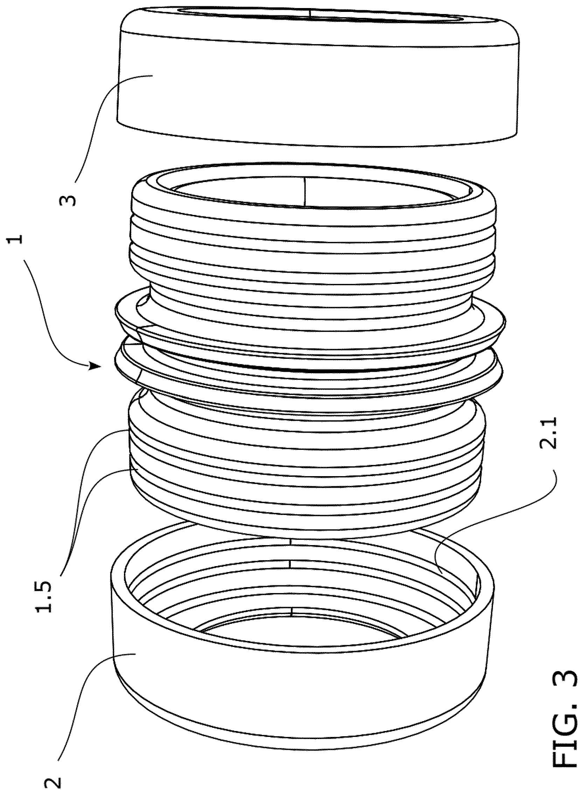

Figure 3 is an exploded perspective view where the outer surface of the first body (1) and the two rings (2, 3) can be seen, in particular all the perimeter recesses (1.5) and perimeter protrusions (2.1, 3.1), in this case in the ring (2) located on the left. In this view, the O-rings (4) are not visible.

Figure 4 provides visual access to a possible arrangement of the conduits (SP) to be connected when they are not aligned, this example showing that neither of such conduits (SP) is aligned.

This figure shows how the smaller diameter of the inner perimeter flange (1.3.1) is less than any of the diameters of the conduits (SP) to be connected. Even though in this diagram, the conduits (SP) to be connected do not come into contact with the inner perimeter flange (1.3.1), at any time it prevents an insertion intended to go beyond the central area.

The following diameter in order of sizes is the inner diameter of the O-rings (4) which are also smaller than the outer diameter of the conduits (SP) to be connected. This inner diameter of the O-rings (4) does not have to be in correspondence with the inner diameter of the perimeter flange (1.3.1). The figure shows a degree of overlap indicating that, in the operating mode, the O-rings (4) undergo elastic deformation that ensures the sealing.

When there is a degree of angular misalignment, this deformation defines an elliptical contact surface close to a circle and allows the degree of misalignment. This same figure shows that the angular misalignment causes an elevation, following the viewpoint of the figure, of the end of the conduits (SP) to be connected without making contact in this case with the inner wall of the first body (1) given its larger inner diameter.

This results in a connector (1) for quick connection by insertion, which ensures the sealing, even though the conduits it connects are not aligned, neither by coincidence of axes, nor by angular misalignment or by both combined.

## Claims

1. Fluid connector intended for connecting two spaced-apart and essentially aligned conduits (SP), wherein the device comprises:
- a first body (1), having a tubular configuration extending according to a longitudinal direction (X-X'), comprising:
a first rigid end segment (1.1), with its inner surface adapted to establish sealing on the outer surface of the end of a first conduit (SP), and
a second rigid end segment (1.2), arranged at the opposite end according to the longitudinal direction (X-X'), with its inner surface adapted to establish sealing on the outer surface of the end of a second conduit (SP), and
a third intermediate segment (1.3), located between the first outer segment (1.1) and the second end segment (1.2), according to the longitudinal direction (X-X'), with its inner surface configured to fluidically connect the inner surface adapted to establish sealing of the first end segment (1.1) and of the second end segment (1.2);
- a first rigid ring (2) configured to externally surround the first end segment (1.1) of the first body (1), and
- a second rigid ring (3) configured to externally surround the second end segment (1.2) of the first body (1), both rigid rings (2, 3);
wherein the inner surfaces of the first and second end segments (1.1, 1.2) adapted to establish sealing comprise a perimeter seat (1.4), and an elastically deformable sealing element, preferably an O-ring (4), housed in each perimeter seat (1.4), and
wherein the first rigid ring (2) and the second rigid ring (3) are adapted to prevent the sealing element from coming out due to movement in the longitudinal direction.

2. Fluid connector according to claim 1, wherein the third intermediate segment (1.3) has its inner surface configured either to establish contact with, or to be arranged between, the ends of the two conduits (SP) to be connected and to prevent said conduits (SP) from contacting one another.

3. Fluid connector according to the preceding claim, wherein the third intermediate segment (1.3) comprises at least one inner flange (1.3.1), preferably a continuous or discontinuous inner perimeter flange, which is an integral part of the first body (1) configured to limit the insertion of any of the two conduits (SP) to be connected, according to the longitudinal direction (X-X').

4. Fluid connector according to any of the preceding claims, wherein the first body (1) comprises on the outer surface of the first end segment (1.1), of the second end segment (1.2), or of both segments (1.1, 1.2), a coupling complementary to another one of the inner surface of the corresponding ring (2, 3):
- either the outer surface of the first body (1) comprises at least one recess (1.5), preferably a perimeter recess, complementary to a flange (2.1, 3.1), also preferably a perimeter flange, of the ring (2, 3), or
- the outer surface of the first body (1) comprises at least one flange, preferably a perimeter flange, complementary to a recess, also preferably a perimeter recess, of the ring (2, 3);
for the axial retention of the ring (2, 3).

5. Fluid connector according to any of the preceding claims, wherein at least one of the rings (2, 3) and an end segment (1.1, 1.2) are attached by a threaded attachment.

6. Fluid connector according to any of the preceding claims, wherein the inner diameter of the sealing element (4) before being coupled to the conduit (SP) is smaller than the inner diameter of the third intermediate segment (1.3) to allow a lack of alignment.

7. Fluid connector according to the preceding claim, wherein the outer diameter of the conduit (SP) for which it is intended to be coupled in the operating mode is smaller than the inner diameter of the third intermediate segment (1.3) to allow a lack of alignment.

8. Fluid connector according to any of the preceding claims, wherein the first ring (2), the second ring (3), or both rings (2, 3), comprise an axial retention element (2.2, 3.2) preventing the sealing element (4) from coming out.

9. Fluid connector according to the preceding claim, wherein the axial retention element (2.2, 3.2) is a plate located perpendicular to the longitudinal direction (X-X') with an opening for the passage of the conduit (SP).

10. A heat exchange system comprising a plurality of heat exchange tubes with at least one fluidic connection for a heat exchange liquid, wherein the plurality of heat exchange tubes are interconnected by means of a connector according to any of the preceding claims.

11. Method of assembling a fluid connector according to any of claims 1 to 9, which comprises performing the following steps in any order:
- inserting the sealing elements into the perimeter seats (1.4);
- inserting the first rigid ring (2) into the first end segment (1.1) of the first body (1) such that the first rigid ring (2) externally surrounds the first end segment (1.1) of the first body (1); and
- inserting the second rigid ring (3) into the second end segment (1.2) of the first body (1) such that the second rigid ring (3) externally surrounds the second end segment (1.2) of the first body (1).

12. Method for connecting two essentially aligned conduits (SP) by means of the device assembled according to the method of the preceding claim, which comprises:
- inserting the connector into the end of a conduit (SP) of the two conduits to be connected at one end of the fluid connector,
- inserting the end of the other conduit of the two conduits to be connected into the opposite end of the fluid connector.
